# FASCICULE DE BREVET EUROPEEN

(11) **EP 2 988 972 B1**
(45) Date de publication et mention de la délivrance du brevet: **11.08.2021**
(21) Numéro de dépôt: 14726686.0
(22) Date de dépôt: 22.04.2014
(51) Int. Cl.: B60Q 1/14

(54) **PROCEDE DE COMMANDE D'UN SYSTEME D'ECLAIRAGE REGLABLE POUR UN VEHICULE PORTEUR ET SYSTEME D'ECLAIRAGE REGLABLE**
VERFAHREN ZUR STEUERUNG EINES REGULIERBAREN BELEUCHTUNGSSYSTEMS FÜR EIN TRÄGERFAHRZEUG UND REGULIEBARES BELEUCHTUNGSYSTEM
METHOD FOR CONTROLLING A REGULABLE ILLUMINATING SYSTEM FOR A CARRIER VEHICLE AND REGULABLE ILLUMINATING SYSTEM

(30) Priorité: 25.04.2013 FR 1353788
(43) Date de publication de la demande: 02.03.2016
(73) Titulaire: PSA Automobiles SA, 78300 Poissy (FR); Valeo Vision, 93012 Bobigny Cedex (FR)
(72) Inventeur: SURUGUE, Michel, F-91190 Gif sur Yvette (FR); LEFRANC, Sébastien, F-91370 Verrieres Le Buisson (FR); DELFOSSE, Jean-Sébastien, F-93600 Aulnay sous Bois (FR)
(86) Numéro de dépôt international: PCT/FR2014/050964
(87) Numéro de publication internationale: WO 2014/174196

(56) Documents cités:
- EP-A1- 2 532 950
- EP-A2- 2 036 770
- EP-A2- 2 100 769
- EP-A2- 2 436 969
- EP-A2- 2 479 063
- DE-A1-102007 028 658
- DE-A1-102009 054 238
- FR-A1- 2 957 032
- JP-A- 2010 162 960
- US-A1- 2009 254 247
- US-A1- 2012 299 478

## Description

La présente invention est relative à un procédé de commande d'un système d'éclairage réglable, pour un véhicule porteur. L'invention est aussi relative à un véhicule de type automobile pour mettre en œuvre le procédé conforme à l'invention.

Plus particulièrement, l'invention concerne un tel procédé de commande d'un système d'éclairage réglable, dans lequel le réglage de l'éclairage comporte la détermination de l'éclairage hors d'au moins une zone de présence d'un véhicule cible détecté comme circulant en face du véhicule porteur, de manière à ne pas éblouir le conducteur du véhicule cible.

Ce genre de procédé est connu du document FR2923428. Le procédé selon ce document est mis en œuvre par des projecteurs de type feux de croisement qui sont principalement réglés en azimut. La prestation d'éclairage n'est pas adaptée pour un éclairage lointain.

Les documents FR 2 957 032 A1 et EP 2 436 969 A2 décrivent d'autres procédés d'éclairage réglable connus utilisant des modules bas et des modules hauts à dispositif d'occultation.

La présente invention a notamment pour but de remédier aux inconvénients de l'art antérieur et d'améliorer la prestation d'éclairage.

A cet effet, l'invention a pour objet un procédé de commande d'un système d'éclairage réglable, pour un véhicule porteur tel que défini dans la revendication 1. Le réglage de l'éclairage comporte la détermination de l'éclairage hors d'au moins une zone de présence d'un véhicule cible détecté comme circulant en face du véhicule porteur, de manière à ne pas éblouir le conducteur du véhicule cible. Dans ce procédé, quand le système d'éclairage doit éclairer devant le véhicule porteur en ambiance lumineuse sombre, un éclairage de faisceau bas est commandé à fonctionnement et des modules gauche et droite de source lumineuse de faisceau haut sont, d'une part, commandés à fonctionnement simultanément à l'éclairage de faisceau bas et sont, d'autre part, sélectivement réglés à gauche et à droite pour éclairer hors de ladite au moins une zone de présence de véhicule cible, quand au moins un tel véhicule cible est détecté.

Dans divers modes de réalisation du procédé selon l'invention, on peut éventuellement avoir recours en outre à l'une et/ou à l'autre des dispositions suivantes :
- les modules gauche et droite de source lumineuse de faisceau haut sont d'une part commandés à fonctionnement à portée maximale tant que la détection de véhicule cible détermine l'absence de véhicule cible susceptible de croiser ledit faisceau haut et d'autre part, quand le véhicule cible est détecté, sont commandés à fonctionnement à portée réduite en faisceau haut sélectif suivant le positionnement relatif du véhicule porteur et du véhicule cible pour éclairer à faisceau haut sélectif hors de la zone de présence du véhicule cible détecté, l'éclairage de faisceau bas demeurant à portée maximale quelle que soit la position du véhicule cible ;
- le réglage sélectif du faisceau haut à gauche et à droite peut varier indépendamment pour chacun des modules gauche et droite de source lumineuse de faisceau haut sélectif par un tunnel sombre sur une partie de largeur du faisceau tant au milieu, qu'à droite ou qu'à gauche dudit faisceau haut ;
- les modules gauche et droite de source lumineuse de faisceau haut sélectif sont commandés à réglage par un occulteur de source lumineuse ;
- les modules gauche et droite de source lumineuse de faisceau haut sélectif sont commandés à réglage d'intensité réduite de source lumineuse en cas de détection de pluralité de cibles qui sont situées de manière disparate ;
- l'éclairage de faisceau haut est commandé à réglage en azimut ;
- l'éclairage de faisceau bas est commandé à réglage en azimut en fonction de l'angle du volant du véhicule.

Dans un mode de réalisation du procédé :
- lorsque le véhicule cible est détecté à droite de l'axe du véhicule porteur et tend à s'en rapprocher, le module droit de source lumineuse de faisceau haut sélectif est alors réglé pour éclairer moins loin que la position dudit véhicule cible à droite ; et
- lorsque le véhicule cible est détecté à gauche de l'axe du véhicule porteur et tend à s'en rapprocher, le module gauche de source lumineuse de faisceau haut sélectif est alors réglé pour éclairer moins loin que la position dudit véhicule cible à gauche.

Par ailleurs, l'invention a également pour objet un système d'éclairage réglable défini par la revendication 7 et comprenant :
- des modules séparés pour l'éclairage de faisceau bas et l'éclairage de faisceau haut, avec des modules gauche et droite de source lumineuse de faisceau haut sélectif munis d'un dispositif d'occultation,
- un dispositif de détection de la présence d'un véhicule cible situé en avant d'un véhicule porteur dudit système,
- un dispositif de mesure de la luminosité ambiante,
- un dispositif de contrôle des modules pour l'éclairage qui est en liaison avec le dispositif de détection de présence et le dispositif de mesure de la luminosité, ledit dispositif de contrôle exécutant le procédé conforme à l'invention.

L'invention a pour dernier objet un véhicule automobile porteur d'un système d'éclairage réglable conforme à la revendication 8.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1A est une vue de dessus d'un véhicule mettant un œuvre un procédé selon l'invention de commande d'un système d'éclairage dans un état de plein éclairage, montrant le faisceau haut et le faisceau bas ;
- la figure 1B est une vue de dessus montrant le principe du faisceau haut d'éclairage sélectif par rapport au faisceau haut de la figure 1A ;
- la figure 2 est une vue schématique de dessus du véhicule mettant un œuvre le procédé selon l'invention ;
- la figure 3, la figure 4, la figure 5, la figure 6 et la figure 7 sont des vues du type de la figure 1A et de la figure 1B, dans divers états d'éclairage à l'approche d'un véhicule cible ;
- la figure 8 est une vue conforme à la figure 1A pour le cas d'un mode de réalisation à éclairage directionnel ;
- la figure 9, la figure 10, la figure 11 et la figure 12 sont des vues du type de la figure 1A et de la figure 1B, dans divers états d'éclairage lors du croisement d'un véhicule cible pour deux modes de réalisation à éclairage directionnel ;
- la figure 13 montre une autre variante de réalisation pour une vue du même type que les figures 3 à 12.

Sur les différentes figures, les mêmes références désignent des éléments identiques ou similaires.

Dans la description qui va suivre, la direction désignée comme longitudinale correspond à l'axe d'avancement d'un véhicule qui sert ici de référentiel. La notion de gauche et de droite s'entend dans la présente description pour un véhicule adapté à la conduite en roulant à droite, le volant étant à gauche dans un tel véhicule. Pour un véhicule adapté à la conduite en roulant à gauche, il faut inverser la notion de droite et de gauche dans la description qui va suivre.

En se reportant aux figures, la référence 10 désigne un véhicule, par exemple de type automobile, équipé d'un système d'éclairage selon l'invention et mettant en œuvre le procédé selon l'invention. Ce véhicule sera parfois dénommé véhicule porteur dans la présente description. Le véhicule peut être une voiture de tourisme, mais aussi tout autre engin susceptible de rouler sur une route ou une piste utilisée par d'autres véhicules.

Le véhicule 10 comporte classiquement une unité centrale de contrôle 12 qui gère de manière électrique et électronique le fonctionnement de divers équipements du véhicule.

Le système d'éclairage comprend de manière classique un projecteur 14 de chaque côté de l'avant du véhicule.

Ce système comprend en outre un dispositif de contrôle pour piloter l'éclairage suivant le procédé selon l'invention, en fonction de données de capteurs reliés au dispositif de contrôle, et notamment un capteur de luminosité 17 et un dispositif de détection de la présence d'un véhicule cible.

Dans la variante de réalisation illustré, le dispositif de contrôle est constitué par l'unité centrale de contrôle 12 qui gère, comme les autres équipements de type électrique ou électronique du véhicule, le fonctionnement du système d'éclairage permettant la conduite en ambiance lumineuse sombre, par exemple la nuit. Chaque projecteur 14 est donc électriquement relié à l'unité centrale de contrôle 12 par des branches 16 d'un réseau de câblage du véhicule.

Selon une autre variante, le dispositif de contrôle du système d'éclairage est constitué par un boîtier électronique de commande dédié, qui peut être en liaison avec les capteurs directement ou via l'interface de l'unité centrale de contrôle 12.

Ce système d'éclairage comporte aussi un dispositif de mesure de la luminosité ambiante 17 qui est couramment appelé capteur de luminosité extérieure et qui est, par exemple, implanté sur le haut du milieu du pare brise 22 du véhicule. Le capteur de luminosité extérieure peut être situé ailleurs, par exemple en partie basse du pare-brise.

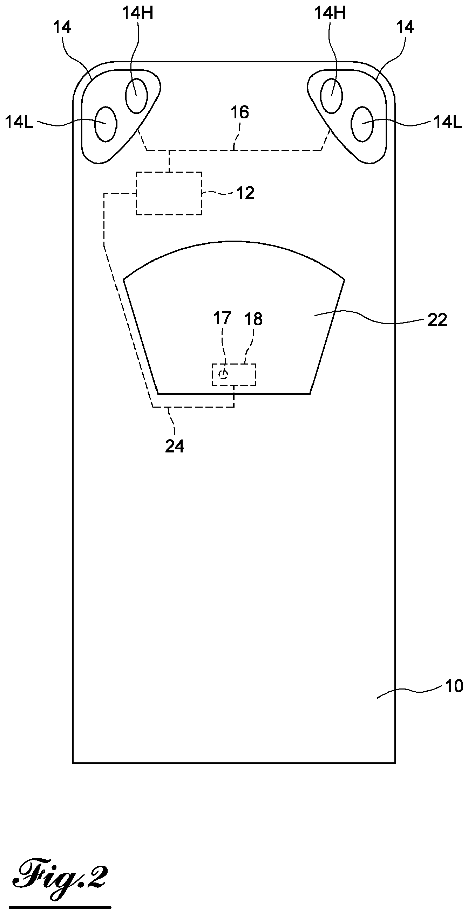

Le système d'éclairage comprend une caméra 18, par exemple implantée au milieu du haut du pare brise 22 du véhicule comme schématisé à la figure 2. La caméra 18 est électriquement reliée à l'unité centrale de contrôle 12 par des branches 24 du réseau de câblage du véhicule. La caméra 18 constitue un dispositif de détection de la présence d'un véhicule cible situé en avant et sur le point par exemple de croiser le véhicule porteur. La caméra 18 capte des images de la route 11 et de son environnement en avant de ce véhicule, pour les transmettre par le réseau à l'unité centrale de contrôle 12 qui traite les informations captées pour adapter l'éclairage. Le capteur de luminosité 17 est par exemple associé à la caméra 18 et ses données passent par exemple par la branche 24 du réseau.

Chaque projecteur 14 est un système d'émission d'éclairage avant qui comprend au moins deux modules de sources lumineuses, à savoir un module 14L de faisceau bas et un module 14H de faisceau haut adapté à fonctionner en mode sélectif ou en mode feux de route. La figure 2 montre schématiquement ces modules.

Chaque source lumineuse dans les modules est de technologie connue, par exemple de type lampe à décharge ou à diodes électroluminescentes.

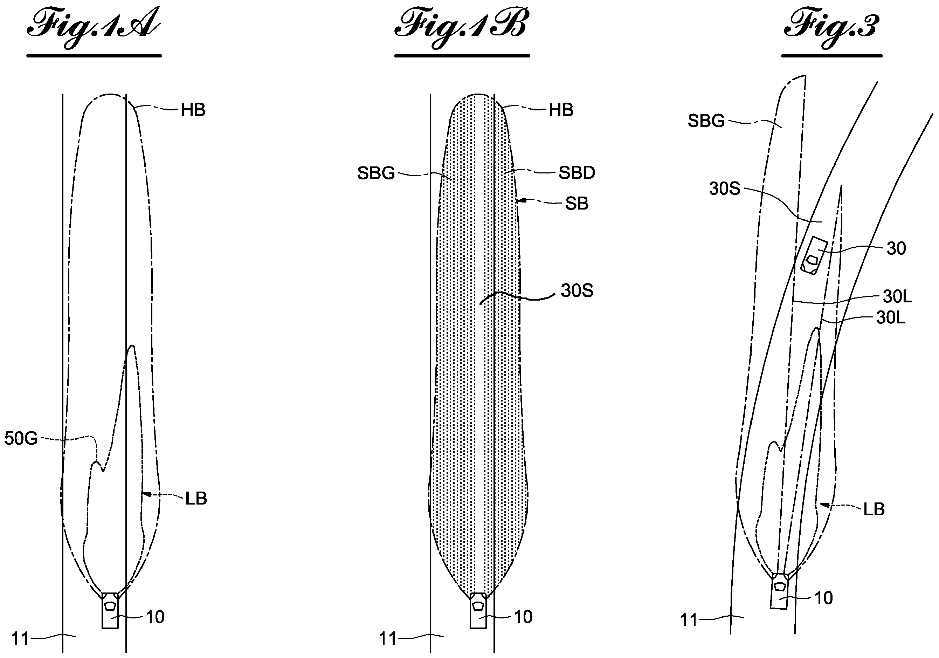

Les modules 14L de faisceau bas produisent un faisceau bas LB, comme représenté par exemple à la figure 1A, venant du projecteur 14 gauche et du projecteur 14 droit. Le faisceau produit par les modules 14L de sources lumineuses de faisceau bas correspond à un éclairage de feux de croisement. Ce faisceau bas est couramment appelé « Low Beam » en utilisant un anglicisme.

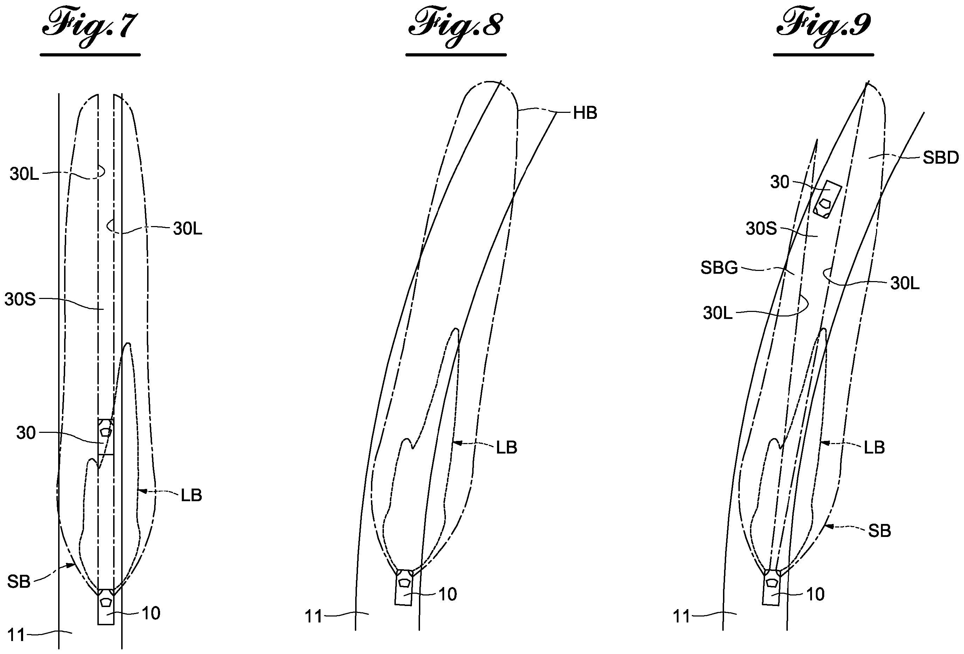

L'éclairage de faisceau bas LB, symbolisé en traits pointillés réguliers à la figure 1A est de portée sensiblement constante, par exemple pour un maximum règlementaire de faisceau de feux de croisement, en respectant la dissymétrie règlementaire entre la gauche et la droite de ce faisceau. L'éclairage de faisceau bas LB est fixe dans le mode de réalisation représenté de la figure 1A à la figure 7 mais il est susceptible d'être réglé en azimut en fonction de l'angle du volant du véhicule, si bien que le réglage en azimut permet d'éclairer la route vers la droite ou vers la gauche lors d'un virage. Cette possibilité de réglage en azimut correspond au véhicule décrit plus tard dans la présente description dans le cas de la variante de mode de réalisation représenté de la figure 8 à la figure 12.

Les modules 14H de faisceau haut à mode sélectif ou à mode feux de route comportent au moins une source lumineuse d'éclairage de feux de route, cet éclairage étant couramment appelé « High Beam » en utilisant un anglicisme. Le faisceau complet d'éclairage de feux de route HB est symbolisé à la figure 1A à laquelle il est bien visible que sa portée est longue par rapport à la portée du faisceau bas.

Par contre, en mode de fonctionnement sélectif, un dispositif d'occultation est activé dans les modules 14H de faisceau haut qui produisent alors un faisceau haut gauche SBG par le projecteur 14 gauche et un faisceau haut droit SBD par le projecteur 14 droit. Ainsi, le faisceau haut est transformé en faisceau haut sélectif référencé SB aux figures. L'éclairage de faisceau haut sélectif SB est symbolisé par des points en nuage à la figure 1B. Il est superposé au faisceau haut complet HB pour bien appréhender leurs zones communes.

Selon l'invention, les occulteurs des dispositifs d'occultation découvrent ou recouvrent progressivement les sources lumineuses des modules 14H pour augmenter le flux lumineux et accroître l'étendue du faisceau haut sélectif SB ou à l'inverse diminuer le flux lumineux et réduire l'étendue du faisceau haut sélectif. Le maximum de portée du faisceau haut sélectif SB est ici proche du maximum règlementaire de faisceau de feux de route correspondant au faisceau haut complet HB.

L'éclairage de faisceau haut sélectif SB est donc d'étendue ou de portée ajustable ou adaptative pour régler la ligne de coupure d'éclairage 30L assurée pour la fonction anti éblouissement qui sera décrite ultérieurement en utilisant avantageusement les occulteurs. Chaque occulteur est de technologie connue dans les dispositifs d'occultation.

L'éclairage de faisceau haut sélectif SB est symétrique en étant identique pour le projecteur droit et le projecteur gauche lorsque le faisceau haut sélectif SB est au maximum, quand il a dans l'axe du véhicule porteur 10 une cible dont le conducteur serait susceptible d'être ébloui. A la figure 1B, ce faisceau sélectif à sa portée maximum est représenté dans son principe, avec un tunnel sans éclairage, ou une zone sombre 30S dans l'axe du véhicule porteur. L'étendue du faisceau haut sélectif varie suivant la largeur de la zone sombre 30S qui influence aussi sur la longueur de portée du faisceau.

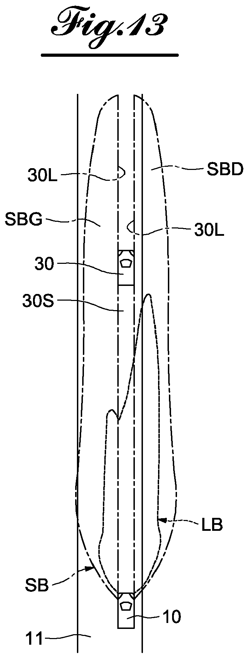

Les analyses par le dispositif de contrôle des données de la caméra 18 et du capteur de luminosité 17 déterminent le niveau de l'éclairage ambiant, permettant de définir notamment si le véhicule porteur roule en zones éclairées, ou dans le noir. Selon les résultats des détections, quand le véhicule porteur roule dans le noir, les analyses déterminent aussi la présence de véhicules cibles devant le véhicule porteur 10. Un véhicule cible 30 peut par exemple venir dans le sens opposé au véhicule porteur (figure 3 par exemple), ou rouler dans le même sens (figure 7 et figure 13) que le véhicule porteur.

Chaque module 14H de faisceau haut sélectif SB a son moyen d'occultation piloté par l'unité centrale de contrôle 12, permettant de créer la zone sombre 30S entourant le véhicule cible 30 repéré ou une pluralité de zones sombres pour une pluralité de véhicules cibles repérés. Les moyens d'occultation sont par exemple des caches de type classiques comme des barillets tournants ou des couteaux se déplaçant pour venir occulter en partie les flux de lumière émis par les sources lumineuses des modules correspondants.

Avantageusement, la zone sombre 30S dans le faisceau haut sélectif SB est déplacée en fonction de l'avancement du véhicule cible 30 pour suivre ce dernier véhicule. A cet effet, un réglage automatique de la distance et de la largeur d'éclairage de l'un ou des deux modules de lumière 14H est effectué pour déplacer la zone sombre 30S. Le faisceau haut sélectif SB peut être ajusté en flux lumineux pour modifier la portée, en étant ajusté sélectivement suivant la position d'une cible ou de plusieurs cibles à ne pas éclairer. En cas de pluralité de cibles qui sont situées de manière disparate, le faisceau haut sélectif SB est éteint et seul le faisceau bas LB est actif.

Le fonctionnement du système d'éclairage conformément au procédé selon l'invention ressort déjà en partie de la description qui précède et va maintenant être détaillé dans divers cas de circulation en ambiance lumineuse sombre.

Quand le véhicule roule la nuit dans une zone urbaine éclairée par un éclairage public, la lumière ambiante est relativement sombre. Elle est détectée comme telle par le traitement, dans l'unité centrale de contrôle 12, des données fournies par la caméra 18 et le capteur de luminosité 17. Les projecteurs 14 sont automatiquement activés par l'allumage en position feux de croisement. Il s'agit de l'activation des modules 14L de faisceau bas LB. Le faisceau haut sélectif SB n'est pas activé.

Quand le véhicule porteur 10 roule sur une route ou une autoroute pendant que l'ambiance lumineuse est sombre, par exemple la nuit, les sources lumineuses des modules 14L de faisceau bas LB sont commandées à fonctionnement et les sources lumineuses des modules 14H de faisceau haut sont commandées à fonctionnement simultané. Ainsi, le conducteur du véhicule porteur 10 bénéficie tout le temps en ambiance sombre de la combinaison de l'éclairage résultant d'une part du faisceau bas LB et d'autre part du faisceau haut sélectif SB ou du faisceau haut complet HB.

Le cas selon lequel le véhicule porteur 10 roule en ligne droite sans croiser ou sans suivre de véhicule cible est illustré à la figure 1A. En outre, ce cas correspond à une configuration de plein éclairage à laquelle la portée maximale est commandée pour le faisceau haut HB.

A la figure 1B, le faisceau haut gauche SBG et le faisceau haut droit SBD du faisceau haut sélectif sont illustrés pour montrer le principe général d'occultation en U et pour les montrer en comparaison du faisceau haut complet.

Dans cette configuration de roulage en ligne droite la nuit, en cas de présence de véhicule cible dont le conducteur pourrait être ébloui par le faisceau haut complet HB, ce faisceau HB est désactivé et transformé en faisceau haut sélectif SB. Dans le cas d'un véhicule cible 30 circulant en étant suivi relativement près par le véhicule porteur 10, le faisceau haut sélectif SB est commandé occulté dans l'axe du véhicule porteur 10 qui correspond aussi à l'axe du véhicule cible 30, comme représenté à la figure 7. Le faisceau haut droit SBD et le faisceau haut gauche SBG sont commandés à occultation pour déterminer le tunnel central de zone sombre. Ainsi, avantageusement, sur les côtés de la route 11, l'éclairage est long et le véhicule cible 30 est dans la zone sombre 30S d'occultation du milieu du faisceau haut, pour que le conducteur ne soit pas ébloui.

Dans la configuration de roulage la nuit en ligne courbe vers la droite, le faisceau bas LB et le faisceau haut, dans le premier mode de réalisation représenté de la figure 3 à la figure 7, restent dans l'axe du véhicule porteur 10.

En cas de véhicule cible 30 circulant en sens inverse lors de ce virage à droite, en étant encore relativement lointain et au-delà de la portée maximum du faisceau bas LB, comme représenté à la figure 3, le faisceau haut droit SBD est commandé à réduction de portée par réduction de largeur pendant le croisement, pour que la zone sombre 30S soit en correspondance de l'emplacement du véhicule cible 30 afin que son conducteur ne soit pas ébloui. Ainsi, la ligne de coupure 30L devance le véhicule cible 30. Le conducteur du véhicule porteur 10 bénéfice d'une part du faisceau haut gauche SBG pour voir loin sur le côté gauche de la route et d'autre part du faisceau bas LB pour voir suffisamment loin sur le côté droit de la route.

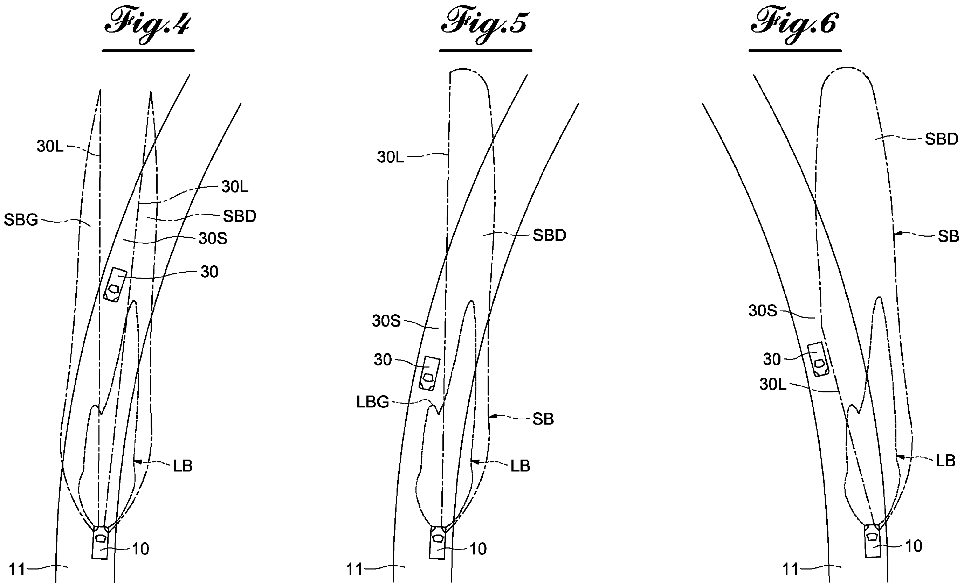

Lorsque le véhicule cible 30 et le véhicule porteur se rapprochent en se croisant, le véhicule cible 30 passe alors en regard de l'avant et de la gauche du faisceau bas LB, comme représenté à la figure 4. A ce stade du croisement des deux véhicules, comme le véhicule cible 30 est sensiblement dans l'axe du véhicule porteur 10, le faisceau haut droit SBD et le faisceau haut gauche SBG sont commandés à réduction de largeur entraînant une réduction de portée pendant le croisement, pour que la zone sombre soit en correspondance de l'emplacement du véhicule cible. Le tunnel de zone sombre 30S est sur le faisceau haut gauche SBG et sur le faisceau haut droit SBD par occultation de la partie centrale de ces faisceaux. La ligne de coupure 30L est conformée sensiblement en U ayant une branche sensiblement en correspondance de chacune des parties du faisceau haut sélectif. L'âme du U est centrée sensiblement sur le milieu de l'avant du véhicule cible. Ainsi, le faisceau haut sélectif SB est commandé à fonctionnement à étendue réduite suivant le positionnement relatif du véhicule porteur 10 et du véhicule cible 30 pour éclairer hors de la zone de présence du véhicule cible détecté. Comme la zone sombre 30S est relativement étroite, la réduction de portée est relativement limitée.

La ligne de coupure 30L pourrait aussi être conformée sensiblement en V au lieu d'être en U, en ayant une branche du V sensiblement en correspondance de chacune des parties du faisceau haut sélectif, à savoir à sa droite et à sa gauche.

Lorsque le véhicule cible 30 et le véhicule porteur se rapprochent encore en se croisant, le véhicule cible 30 passe alors le long de la ligne de portée LBG de la gauche du faisceau bas, comme représenté à la figure 5. A ce stade du croisement des deux véhicules, le véhicule cible 30 n'est plus dans le faisceau haut droit SBD et seul le faisceau haut gauche SBG est commandé à réduction de portée pendant le croisement. Dans le cas représenté à la figure 5, le faisceau haut gauche SBG est complètement occulté. Si tel n'était pas le cas, il serait très petit, et présent pendant un très bref instant, à gauche du véhicule cible. Le conducteur du véhicule porteur 10 bénéfice d'une part du faisceau haut droit SBD pour voir loin sur le côté droit de la route, à l'arrière du véhicule cible 30, et d'autre part du faisceau bas LB pour voir sur le côté gauche de la route.

Dans la configuration de roulage la nuit en ligne courbe vers la gauche, le faisceau haut sélectif SB éclaire surtout la droite de la route. Le faisceau haut est commandé à portée maximale en produisant le faisceau haut complet HB tant qu'il n'y a pas de véhicule cible susceptible d'entrer dans ce dernier faisceau. Il n'y donc pas besoin de déterminer une zone sombre tant que tout véhicule cible est loin du véhicule porteur.

En cas de véhicule cible 30 circulant en sens inverse lors de ce virage à gauche, comme représenté à la figure 6, le faisceau haut est commandé à fonctionnement sélectif quand le véhicule cible 30 est susceptible d'entrer dans la zone de portée du faisceau haut complet HB. Le faisceau haut gauche SBG est réduit rapidement quand le véhicule cible est à proximité du véhicule porteur 10. Le conducteur du véhicule porteur 10 bénéfice d'une part de la droite SBD du faisceau haut sélectif SB qui est large pour voir loin sur le côté droit de la route et d'autre part du faisceau bas LB pour voir relativement près sur le côté gauche de la route. A cet effet, quand le véhicule cible 30 se rapproche du véhicule porteur 10, le module gauche de source lumineuse de faisceau haut sélectif est occulté pour éclairer moins loin que la position dudit véhicule cible à gauche, en déterminant alors une zone sombre en correspondance du véhicule cible venant à l'approche du véhicule porteur pour le croiser.

Dans la configuration de roulage en ligne droite la nuit, mais en cas de véhicule cible circulant en sens inverse, l'unité centrale de contrôle 12 commande le faisceau haut sélectif SB comme dans le cas de la figure 5 ou de la figure 6. Le faisceau bas LB demeure inchangé. C'est le faisceau haut gauche SBG qui est commandé à réduction de portée en étant occulté pendant le croisement, pour que la zone sombre soit en correspondance de l'emplacement du véhicule cible afin que son conducteur ne soit pas ébloui. Le conducteur du véhicule porteur bénéfice du faisceau haut droit SBD du faisceau haut sélectif SB pour voir loin sur le côté droit de la route.

Avantageusement, le flux lumineux par le faisceau haut sélectif SB, modulable à sa moitié gauche ou à sa moitié droite indépendamment, permet au conducteur du véhicule porteur de disposer d'un éclairage optimisé pour voir loin, sans éblouissement du conducteur du véhicule cible. De nombreuses configurations de situation de réglage sont possibles en permettant que le confort visuel du conducteur du véhicule porteur soit optimisé, tout comme la sécurité des occupants des deux véhicules.

Avantageusement, le flux lumineux et la variation de l'étendue du faisceau haut sélectif SB sont ajustables en continu, au bénéfice de la stabilité de l'éclairage et de la stabilité de zone sombre, sans ligne de coupure d'éclairage à variation instable.

Avantageusement, le système fonctionne pour au moins un véhicule cible détecté comme circulant en face du véhicule porteur, de manière à ne pas éblouir le conducteur du véhicule cible, que le véhicule porteur suive le véhicule cible ou croise le véhicule cible.

Dans le premier mode de réalisation tel que décrit précédemment en relation avec les figures 3 à 7, les projecteurs 14 sont de type à faisceau à axe fixe.

En variante, dans le second mode de réalisation tel que représenté de la figure 8 à la figure 13, les projecteurs 14 sont de type à faisceau à axe pouvant varier en azimut, tant pour les modules 14L de faisceau bas que pour les modules 14H de faisceau haut. Ainsi, le faisceau bas LB est directif, tout comme le faisceau haut, suivant l'angle du volant.

Dans la configuration de roulage la nuit en ligne courbe vers la droite, en absence de cible comme représenté à la figure 8, le faisceau bas LB et le faisceau haut HB sont décalés vers la droite suivant l'angle du volant et l'orientation des roues avant du véhicule porteur 10.

En cas de véhicule cible 30 circulant en sens inverse lors de ce virage à droite, en étant encore relativement lointain et au-delà de la portée maximum du faisceau bas LB sensiblement dans l'axe du véhicule porteur 10, comme représenté à la figure 9, le faisceau haut droit SBD et le faisceau haut gauche SBG sont commandés à réduction de portée par réduction de l'étendue des faisceaux du fait de la présence du tunnel central déterminant la zone sombre 30S. Comme précédemment, la zone sombre 30S est en correspondance de l'emplacement du véhicule cible 30 afin que son conducteur ne soit pas ébloui.

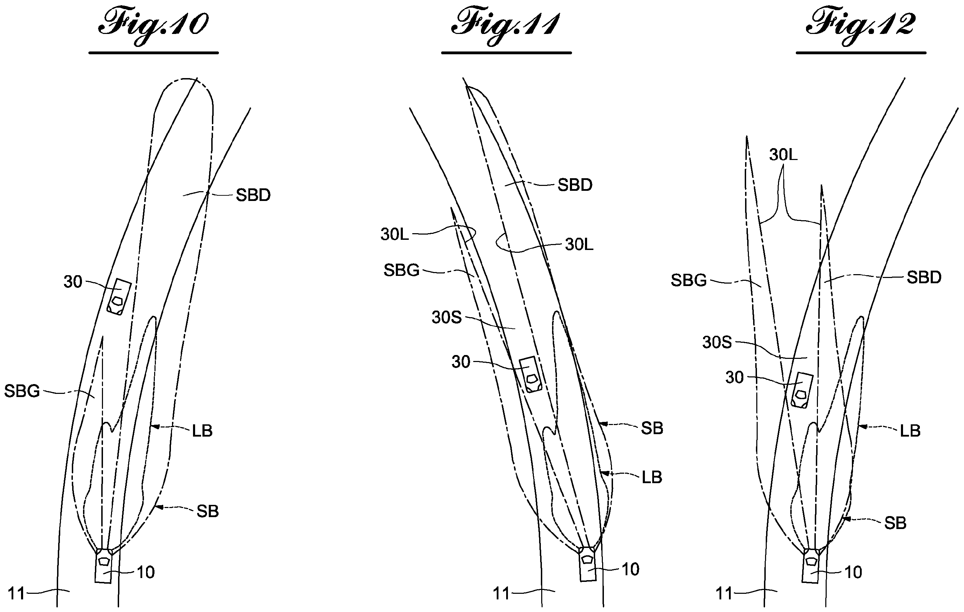

Lorsque le véhicule cible 30 et le véhicule porteur se rapprochent en se croisant, le véhicule cible 30 passe alors en regard de l'avant et de la gauche du faisceau bas LB, comme représenté à la figure 10.

A ce stade du croisement des deux véhicules, comme le véhicule cible 30 est sensiblement dans l'axe du véhicule porteur 10 dont le faisceau haut est dévié à droite suivant l'angle du volant, le faisceau haut gauche SBG est commandé à réduction de portée par occultation d'une partie importante de sa largeur, pour que la zone sombre soit en correspondance de l'emplacement du véhicule cible qui est relativement près du véhicule porteur. La ligne de coupure 30L reste alors conformée sensiblement en U à branches légèrement inclinées sur le faisceau haut gauche SBG, le faisceau haut droit SBD étant ici au complet. Ici, le faisceau haut sélectif SB éclaire surtout la droite de la route et le conducteur du véhicule porteur 10 bénéficie d'une vision très lointaine sur le bord droit de la route en virage à droite et la zone sombre 30S demeure relativement étroite. Le faisceau bas LB permet toujours au conducteur du véhicule porteur 10 de voir devant, dans la zone sombre 30S du faisceau haut sélectif et directif.

Dans la configuration de roulage la nuit en ligne courbe vers la gauche, comme représenté à la figure 11, le faisceau bas LB est décalé vers la gauche en correspondance de l'angle du volant et de l'orientation des roues avant du véhicule porteur 10, tout comme le faisceau haut. Ainsi, quand un véhicule cible se rapproche, il est sensiblement au milieu du faisceau haut par occultation du faisceau haut droit SBD et du faisceau haut gauche SBG, comme représenté à la figure 11, et la zone sombre 30S est relativement étroite. Le conducteur du véhicule porteur 10 bénéficie d'un éclairage lointain sur le bord gauche et sur le bord droit de la route en virage à gauche. Le faisceau bas LB permet toujours au conducteur du véhicule porteur 10 de voir devant lui, dans la zone sombre 30S du faisceau haut sélectif et directif.

Dans une troisième variante de réalisation, le cas de figure est le roulage avec le faisceau haut qui est directif selon la position angulaire de la cible 30, la zone sombre 30S étant à produire par variation angulaire du faisceau haut sélectif SB par rapport à l'axe longitudinal du véhicule porteur 10 suivant la position de la cible. La zone sombre 30S n'est dans ce cas pas asservie à la position angulaire du volant. Le tunnel d'occultation reste alors autant que possible sensiblement au milieu du faisceau haut sélectif SB, avec sa ligne de coupure 30L à branches inclinées si besoin. Un exemple de situation de roulage est illustré à la figure 12.

Il s'agit dans cet exemple illustratif d'un virage à droite et d'une cible 30 à gauche de l'axe de l'axe du véhicule porteur 10. La zone sombre par occultation est dans ce cas de figure tant sur le faisceau haut droit SBD que sur le faisceau haut gauche SBG.

Compte tenu de l'orientation variable du faisceau haut dont l'axe est centré sur la cible, la zone sombre est toujours relativement étroite et le faisceau haut directif à sa largeur et sa portée la plus grande possible de chaque côté de la cible. L'étendue du faisceau haut est alors optimisée. Ainsi, à l'arrière de la cible 30, le faisceau haut droit SBD éclaire loin le côté de la route et la route elle-même. A l'avant de la cible 30, le faisceau haut gauche SBG éclaire également loin le côté de la route, ce qui permet d'appréhender le profil de la route elle-même. Le faisceau bas LB permet toujours au conducteur du véhicule porteur 10 de voir devant, dans la zone sombre 30S du faisceau haut sélectif et directif.

Dans une autre variante particulière, une option consiste à allonger le faisceau bas LB si besoin, par exemple dans le cas d'un véhicule cible 30 suivi de loin par le véhicule porteur 10, comme représenté à la figure 13. Il s'agit d'une configuration de roulage en ligne droite la nuit, le faisceau haut sélectif SB étant commandé occulté dans l'axe du véhicule porteur 10 qui correspond aussi à l'axe du véhicule cible 30. Le faisceau haut droit SBD et le faisceau haut gauche SBG sont commandés à occultation pour déterminer le tunnel central de zone sombre. Dans ce tunnel, le faisceau bas éclaire relativement loin, par exemple avec augmentation de 20% de portée par remontée en site de l'éclairage des modules 14L de faisceau bas, sans changement de portée pour le faisceau haut.

Ce réglage en portée allongée du faisceau bas est particulièrement utile quand le faisceau haut est désactivé en cas de cibles qui sont disparates et relativement lointaines (cas non représenté). Ainsi, un éclairage relativement long est tout de même possible sans utiliser le faisceau haut. Ce réglage peut être effectué par remontée en site des modules 14L de faisceau bas ou par augmentation de leur alimentation électrique par exemple dans le cas de source lumineuse par diodes électroluminescentes.

En variante envisageable et non représentée, le faisceau haut sélectif et le faisceau haut complet de feux de route sont produits par des modules différents de source lumineuse. Dans ce cas, lorsqu'il n'y a pas de cible à protéger par une zone sombre, le faisceau haut sélectif et le faisceau haut complet de feux de route peuvent être activés simultanément. Le faisceau haut complet de feux de route est éteint quand le faisceau haut sélectif est utile pour préserver le conducteur d'un véhicule cible.

En variante envisageable, quand le dispositif de détection détecte une pluralité de cibles qui sont situées de manière disparate, le faisceau haut sélectif reste activé, mais est commandé à intensité très réduite. Cette intensité très réduite peut aussi être utilisée en circulation urbaine ou en circulation dans un tunnel avec des éclairages à son plafond et/ou à ses murs. Ce faisceau provient alors avantageusement de sources pouvant être réglées en intensité par un variateur ou un rhéostat. Sinon, ce faisceau peut être réglé par occulteur ajustant la portée à un minimum compris dans le faisceau bas d'éclairage de feux de croisement.

## Revendications

1. Procédé de commande d'un système d'éclairage réglable, pour un véhicule porteur (10), le réglage de l'éclairage comportant la détermination de l'éclairage hors d'au moins une zone sombre (30S) de présence d'un véhicule cible (30) détecté comme circulant en face du véhicule porteur, de manière à ne pas éblouir le conducteur du véhicule cible, et quand le système d'éclairage doit éclairer devant le véhicule porteur (10) en ambiance lumineuse sombre, par exemple la nuit, des modules (14L) gauche et droit de faisceau bas (LB) sont commandés à fonctionnement et des modules (14H) gauche et droit de source lumineuse de faisceau haut sont d'une part commandés à fonctionnement simultanément avec les modules (14L) gauche et droit de faisceau bas (LB) et sont d'autre part sélectivement réglés à gauche et à droite pour éclairer à faisceau haut sélectif (SB) hors de ladite zone sombre (30S) de présence de véhicule cible quand au moins un tel véhicule cible (30) est détecté, les modules (14H) gauche et droit de source lumineuse de faisceau haut sélectif (SB), générant respectivement un faisceau haut gauche et un faisceau haut droit (SBG, SBD), étant commandés indépendamment à réglage par un occulteur de source lumineuse pour définir ladite zone sombre (30S) sur une partie de largeur du faisceau haut sélectif (SB) tant au milieu, qu'à droite ou qu'à gauche dudit faisceau haut sélectif (SB) ;
**caractérisé en ce qu'**un des deux faisceaux haut gauche ou droit (SBG, SBD) peut être complètement occulté.

2. Procédé selon la revendication précédente, **caractérisé en ce que** les modules (14H) gauche et droit de source lumineuse de faisceau haut sont d'une part commandés à fonctionnement à étendue maximale tant que la détection de véhicule cible (30) détermine l'absence de véhicule cible (30) susceptible de croiser ledit faisceau haut et d'autre part, quand le véhicule cible est détecté, sont commandés à fonctionnement à étendue réduite en faisceau haut sélectif (SB) suivant le positionnement relatif du véhicule porteur (10) et du véhicule cible pour éclairer hors de la zone sombre (30S) de présence du véhicule cible détecté, l'éclairage de faisceau bas (LB) demeurant à étendue maximale quelle que soit la position du véhicule cible.

3. Procédé selon l'une des revendications précédentes, **caractérisé en ce que** :
• lorsque le véhicule cible (30) est détecté à droite de l'axe du véhicule porteur (10) et tend à s'en rapprocher, le module (14H) droit de source lumineuse de faisceau haut sélectif (SB) est alors réglé pour éclairer moins loin que la position dudit véhicule cible à droite ; et
• lorsque le véhicule cible (30) est détecté à gauche de l'axe du véhicule porteur (10) et tend à s'en rapprocher, le module (14H) gauche de source lumineuse de faisceau haut sélectif (SB) est alors réglé pour éclairer moins loin que la position dudit véhicule cible à gauche.

4. Procédé selon l'une quelconque des revendications précédentes, **caractérisé en ce que** les modules (14H) gauche et droite de source lumineuse de faisceau haut sélectif (SB) sont commandés à réglage d'intensité réduite de source lumineuse en cas de détection d'une pluralité de cibles (30) qui sont situées de manière disparate.

5. Procédé selon l'une quelconque des revendications précédentes, **caractérisé en ce que** l'éclairage de faisceau haut (HB) est commandé à réglage en azimut.

6. Procédé selon l'une quelconque des revendications précédentes, **caractérisé en ce que** l'éclairage de faisceau bas (LB) est commandé à réglage en azimut en fonction de l'angle du volant du véhicule.

7. Système d'éclairage réglable, **caractérisé en ce que** ledit système d'éclairage comprend :
• des modules (14L, 14H) séparés pour l'éclairage de faisceau bas (LB) et l'éclairage de faisceau haut, avec des modules (14H) gauche et droit de source lumineuse de faisceau haut sélectif (SB) munis d'un dispositif d'occultation permettant d'occulter complètement un des deux faisceaux hauts gauche ou droit (SBG, SBD),
• un dispositif de détection (18) de la présence d'un véhicule cible (30) situé en avant d'un véhicule porteur (10) dudit système,
• un dispositif de mesure (17) de la luminosité ambiante,
• un dispositif de contrôle des modules (14H,14L) pour l'éclairage qui est en liaison avec le dispositif de détection (18) et le dispositif de mesure (17) de la luminosité, ledit dispositif de contrôle exécutant le procédé conforme à l'une quelconque des revendications précédentes.

8. Véhicule automobile porteur d'un système d'éclairage réglable selon la revendication 7.

## Patentansprüche

1. Verfahren zum Steuern eines einstellbaren Beleuchtungssystems für ein Trägerfahrzeug (10), wobei das Einstellen der Beleuchtung das Bestimmen der Beleuchtung außerhalb mindestens eines dunklen Bereichs (30S) der Anwesenheit eines Zielfahrzeugs (30), das als vor dem Trägerfahrzeug fahrend erkannt wird, umfasst, um den Fahrer des Zielfahrzeugs nicht zu blenden, und wenn das Beleuchtungssystem vor dem Trägerfahrzeug (10) in einer dunklen Beleuchtungsumgebung, beispielsweise bei Nacht, leuchten soll, **dadurch gekennzeichnet, dass** linke und rechte Abblendlicht-(LB)-Module (14L) betriebsmäßig gesteuert werden und linke und rechte Fernlicht-Lichtquellenmodule (14H) einerseits gleichzeitig mit den linken und rechten Abblendlicht-(LB)-Modulen (14L) betriebsmäßig gesteuert werden und andererseits selektiv nach links und rechts zur selektiven Fernlichtausleuchtung (SB) aus der dunklen Zielfahrzeug-Anwesenheitszone (30S) heraus verstellt werden, wenn mindestens ein solches Zielfahrzeug (30) erkannt wird wobei die linken und rechten Lichtquellenmodule (14H) des selektiven Fernlichts (SB), die jeweils ein linkes und ein rechtes Fernlicht (SBG, SBD) erzeugen, unabhängig voneinander durch einen Lichtquellenausblender steuerbar sind, um die Dunkelzone (30S) über einen Breitenabschnitt des selektiven Fernlichts (SB) sowohl in der Mitte als auch rechts oder links von dem selektiven Fernlicht (SB) zu definieren; **dadurch gekennzeichnet, dass** eines der linken oder rechten Fernlichter (SBG, SBD) komplett ausgeblendet werden kann.

2. Verfahren nach dem vorhergehenden Anspruch, **dadurch gekennzeichnet, dass** das linke und das rechte Fernlichtquellenmodul (14H) einerseits so gesteuert werden, dass sie bei maximaler Reichweite arbeiten, solange die Zielfahrzeugerkennung (30) die Abwesenheit eines Zielfahrzeugs (30) feststellt, das wahrscheinlich das Fernlicht kreuzen wird, und andererseits, wenn das Zielfahrzeug erkannt wird werden so gesteuert, dass sie bei reduzierter Reichweite in einem selektiven Fernlicht (SB) entsprechend der relativen Positionierung des Trägerfahrzeugs (10) und des Zielfahrzeugs arbeiten, um außerhalb der Dunkelzone (30S) der Anwesenheit des erkannten Zielfahrzeugs zu leuchten, wobei die Abblendlichtbeleuchtung (LB) unabhängig von der Position des Zielfahrzeugs bei maximaler Reichweite bleibt.

3. Verfahren nach einem der vorhergehenden Ansprüche, **dadurch gekennzeichnet, dass**:
- wenn das Zielfahrzeug (30) rechts von der Achse des Trägerfahrzeugs (10) erkannt wird und dazu neigt, sich ihm zu nähern, wird das rechte selektive Fernlichtquellenmodul (14H) dann so eingestellt, dass es weniger weit als die Position des Zielfahrzeugs rechts beleuchtet; und
- wenn das Zielfahrzeug (30) links von der Achse des Trägerfahrzeugs (10) erkannt wird und dazu neigt, sich diesem zu nähern, dann wird die linke selektive Fernlichtquelleneinheit (14H) so eingestellt, dass sie weniger weit als die Position des Zielfahrzeugs nach links leuchtet.

4. Verfahren nach einem der vorhergehenden Ansprüche, **dadurch gekennzeichnet, dass** das linke und rechte selektive Fernlicht (SB) Lichtquellenmodul (14H) auf eine reduzierte Lichtquellenintensitätseinstellung gesteuert wird, wenn mehrere Ziele (30) erkannt werden, die ungleich angeordnet sind.

5. Verfahren nach einem der vorhergehenden Ansprüche, **dadurch gekennzeichnet, dass** die Fernlichtbeleuchtung (HB) bei der Azimutverstellung gesteuert wird.

6. Verfahren nach einem der vorhergehenden Ansprüche, **dadurch gekennzeichnet, dass** die Abblendlichtbeleuchtung (LB) azimutal in Abhängigkeit vom Lenkradwinkel des Fahrzeugs gesteuert wird.

7. Ein einstellbares Beleuchtungssystem, **dadurch gekennzeichnet, dass** das Beleuchtungssystem umfasst:
- getrennte Module (14L, 14H) für die Abblendlichtbeleuchtung (LB) und die Fernlichtbeleuchtung, wobei linke und rechte selektive Fernlichtquellenmodule (14H) (SB) mit einer Ausblendvorrichtung zur vollständigen Ausblendung eines der beiden linken oder rechten Fernlichter (SBG, SBD) versehen sind,
- eine Vorrichtung (18) zum Erkennen der Anwesenheit eines Zielfahrzeugs (30), das sich vor einem Trägerfahrzeug (10) des genannten Systems befindet
- eine Vorrichtung (17) zur Messung der Umgebungshelligkeit
- eine Einrichtung zur Steuerung der Module (14H, 14L) zur Beleuchtung, die mit der Erfassungseinrichtung (18) und der Einrichtung zur Messung (17) der Helligkeit in Verbindung steht, wobei die Steuereinrichtung das Verfahren nach einem der vorhergehenden Ansprüche durchführt.

8. Kraftfahrzeug mit einem verstellbaren Beleuchtungssystem nach Anspruch 7.

## Claims

1. A method of controlling an adjustable lighting system for a carrier vehicle (10), the adjustment of the lighting comprising determining the illumination outside at least one dark area (30S) of presence of a target vehicle (30) detected as driving in front of the carrier vehicle, so as not to dazzle the driver of the target vehicle, and when the lighting system is to illuminate in front of the carrier vehicle (10) in a dark lighting environment, e.g. at night left and right low beam (LB) modules (14L) are controlled to operate and left and right high beam light source modules (14H) are on the one hand controlled to operate simultaneously with the left and right low beam (LB) modules (14L) and on the other hand are selectively adjusted on the left and on the right to illuminate with a selective high beam (SB) out of the said dark zone (30S) of target vehicle presence when at least one such target vehicle (30) is detected the left and right light source modules (14H) of the selective high beam (SB), generating respectively a left and a right high beam (SBG, SBD), being independently controllable by a light source blanker to define said dark zone (30S) over a width portion of the selective high beam (SB) both in the middle and to the right or left of said selective high beam (SB) **characterized in that** one of the two left or right high beams (SBG, SBD) can be completely blocked out.

2. Method according to the preceding claim, **characterized in that** the left and right high beam light source modules (14H) are, on the one hand, controlled to operate at maximum range as long as the target vehicle detection (30) determines the absence of a target vehicle (30) likely to cross said high beam and, on the other hand, when the target vehicle is detected are controlled to operate at reduced range in selective high beam (SB) according to the relative positioning of the carrier vehicle (10) and the target vehicle in order to illuminate outside the dark zone (30S) of presence of the detected target vehicle, the low beam illumination (LB) remaining at maximum range whatever the position of the target vehicle.

3. A method according to any of the preceding claims, **characterized in that**:
- when the target vehicle (30) is detected to the right of the axis of the carrier vehicle (10) and tends to approach it, then the right selective high beam light source module (14H) is set to illuminate less far than the position of said target vehicle to the right; and
- when the target vehicle (30) is detected to the left of the axis of the carrier vehicle (10) and tends to approach it, then the left selective high beam light source module (14H) is set to shine less far than the position of said target vehicle to the left.

4. A method according to any one of the preceding claims, **characterized in that** the left and right selective high beam (SB) light source modules (14H) are controlled to reduced light source intensity setting upon detection of a plurality of targets (30) that are disparately located.

5. The method according to any one of the preceding claims, **characterized in that** the high beam illumination (HB) is controlled at azimuthal adjustment.

6. The method according to any one of the preceding claims, **characterized in that** the low beam illumination (LB) is azimuthally controlled as a function of the steering wheel angle of the vehicle.

7. An adjustable lighting system, **characterized in that** said lighting system comprises:
- separate modules (14L, 14H) for low beam illumination (LB) and high beam illumination, with left and right selective high beam light source modules (14H) (SB) provided with a blanking device for completely blanking one of the two left or right high beams (SBG, SBD),
- a device (18) for detecting the presence of a target vehicle (30) located in front of a carrier vehicle (10) of said system
- a device (17) for measuring the ambient brightness,
- a control device of the modules (14H, 14L) for lighting which is in connection with the detection device (18) and the brightness measuring device (17), said control device executing the method according to any of the preceding claims.

8. A motor vehicle carrying an adjustable lighting system according to claim 7.
